# EUROPÄISCHE PATENTSCHRIFT

(11) **EP 0 512 550 B1**
(45) Veröffentlichungstag und Bekanntmachung des Hinweises auf die Patenterteilung: **11.10.1995**
(21) Anmeldenummer: 92107753.3
(22) Anmeldetag: 08.05.1992
(51) Int. Cl.: B60G 17/04, B60G 9/00, F16F 9/08

(54) **Gefederte Aufhängung einer Lenkachse**
Spring suspension of a steering axle
Suspension d'essieu directeur à ressort

(30) Priorität: 10.05.1991 DE 4115311
(43) Veröffentlichungstag der Anmeldung: 11.11.1992
(73) Patentinhaber: DEERE & COMPANY, Moline, Illinois 61265 (US)
(72) Erfinder: Kryscyk, Robert, W-6834 Ketsch (DE)
(74) Vertreter: Feldmann, Bernhard

(56) Entgegenhaltungen:
- DE-A- 2 806 203
- DE-A- 3 900 899
- DE-A- 4 003 200
- GB-A- 819 095
- US-A- 3 592 485
- US-A- 4 418 932

## Beschreibung

Die Erfindung betrifft die Aufhängung einer Fahrzeuglenkachse, insbesondere eines landwirtschaftlichen oder industriellen Fahrzeuges, mit einer zwischen Fahrzeugoberbau und Achskörper angeordneten Federeinrichtung, die der Schwingungsfederung dient, gemäß dem Oberbegriff des Patentanspruchs 1.

Die lenkbare Vorderachse eines landwirtschaftlichen Schleppers ist gewöhnlich als ungefederte Starrachse ausgebildet, die um einen in Fahrzeuglängsrichtung ausgerichteten, mit dem Vorderachsblock in Eingriff stehenden Pendelbolzen nach beiden Seiten bis zu Pendelanschlägen ausschlagen kann. Infolgedessen können sich die Vorderräder den Bodenunebenheiten weitgehend anpassen, und alle vier Räder stützen sich am Boden ab.

Gefederte Vorderachsen kommen insbesondere für Schlepper mit einer Geschwindigkeit über 30 km/h in Betracht. Hierfür sind Einzelradfederungen mit Gummifedern oder Schraubenfedern bekannt. Eine derartige Federung stört jedoch bei Arbeiten mit Anbaugeräten, z. B. Frontlader oder Pflug, da für die Arbeiten eine gleichbleibende Arbeitshöhe erforderlich ist und die Federung lästige Schwingungen auslösen kann.

Durch die DE-AS 1 655 889 ist eine gefederte Pendellenkachse für Arbeitsfahrzeuge bekannt geworden, bei der der Lenkachskörper um einen am Fahrzeugrahmen festen, außerhalb der Achslinie der Lenkräder liegenden Pendelbolzen schwenkbar ist. Der Pendelbolzen ist längsverschieblich gelagert. Zwischen Pendelbolzen und Lenkachskörper ist konzentrisch zum Pendelbolzen eine Schraubendruckfeder angeordnet, durch die der Pendelbolzen gegen eine geneigte Fläche des Fahrzeugrahmens gedrückt wird, und die die Kräfte einer Durchfederung des Fahrzeugrahmens aufnimmt. Beim Einfedern der Lenkachsräder wird jedoch der Lenkachskörper um die Achse des Anlenkbolzens, der das Pendellager trägt, verschwenkt. Daher können sich beim Durchfedern die Lenkungsdaten, wie Spreizung, Nachlaufwinkel und Sturz, verändern.

Die gattungsbildende US-A-4,418,932 beschreibt eine Vorderachsaufhängung, bei der an dem Fahrzeugchassis jeweils ein Ende von ersten und zweiten spitzwinklig zueinander ausgerichteten und sich schräg nach unten und hinten erstreckenden Schwingen gelenkig befestigt sind. Die anderen Enden der Schwingen sind gelenkig an einem Koppelglied befestigt, welches über ein Pendellager mit der Vorderachse in Verbindung steht. Zwischen dem Koppelglied und dem Fahrzeugchassis sind Feder- und Dämpfungseinrichtungen eingespannt, die Bewegungen zwischen der Achse und dem Fahrzeugchassis ermöglichen.

Bei den bekannten Federungen senkt sich jedoch bei Belastungen durch Anbaugeräte und dergleichen der Fahrzeugoberbau ab. Eine Schrägstellung des Fahrzeuges kann sich auch bei einem Wechsel auf eine andere Bereifungskombination oder bei Austausch der Vorderachse ergeben.

Die mit der Erfindung zu lösende Aufgabe wird darin gesehen, eine Aufhängung für eine gefederte Lenkachse der eingangs genannten Art anzugeben, bei der ein Höhenausgleich des Fahrzeugaufbaus mit einfachen Mitteln möglich ist, wobei jedoch die Lenkungsdaten bei unterschiedlicher Durchfederung nicht verändert werden.

Die Aufgabe wird erfindungsgemäß dadurch gelöst, daß die Hydraulikzylinderbaueinheit einen ersten Hydraulikzylinder enthält der funktionsmäßig mit der Federeinrichtung zwischen dem Fahrzeugoberbau und dem Achskörper in Reihe angeordnet und über ein Hydraulikventil an eine Druckquelle anschließbar ist. An Stelle des Hydraulikzylinders läßt sich grundsätzlich auch ein Pneumatikzylinder einsetzen.

Dies ermöglicht einen Höhenausgleich zwischen Fahrzeugoberbau und Achskörper unter stationären Verhältnissen, so daß eine Durchfederung aufgrund unterschiedlicher Achslasten, beispielsweise durch Aufnahme von Arbeitsgeräten oder Spritzbehältern, oder aufgrund einer Schrägstellung des Fahrzeuges infolge einer von der Grundausrüstung abweichenden Bereifungskombination, ausgeglichen werden kann. Der Fahrzeugoberbau läßt sich somit durch den ersten Hydraulikzylinder in eine gewünschte Lage bringen.

Bei einem Wechsel der Vorderachse braucht diese lediglich an dem Pendelbolzen angebaut zu werden. Die Höhenanpassung kann dann sehr einfach durch die Einstellung des ersten Hydraulikzylinders erfolgen. Eine einfache Höhenanpassung ist wünschenswert, da z. B. bei Straßenfahrt wegen der Sichtverhältnisse und der Scheinwerferstellung das Fahrzeug immer die gleiche Lage einnehmen sollte. Da die Federeinrichtung mit dem ersten Hydraulikzylinder in Reihe liegt, werden durch eine Einstellung des ersten Hydraulikzylinders die Federeigenschaften und Lenkdaten nicht verändert.

Die erfindungsgemäße Achsaufhängung eignet sich sowohl für angetriebene als auch für nicht angetriebene Lenkachsen. Sie läßt sich insbesondere vorteilhaft bei Ackerschleppern, Mähdreschern oder anderen landwirtschaftlichen Maschinen oder bei Baumaschinen einsetzen und beansprucht wenig Raum.

Es ist zweckmäßig, einen zweiten Hydraulikzylinder funktionsmäßig parallel zu der Federeinrichtung anzuordnen. Indem wenigstens eine Kammer des Hydraulikzylinders über ein Ventil mit einem Druckspeicher in Verbindung steht, läßt sich die Wirkung der Federeinrichtung dämpfen (Stoßdämpferwirkung) oder ganz unterdrücken (Starrsetzen). Die Blockierung der Federeinrichtung ist beispielsweise bei Schwerstarbeit oder Feldarbeit, z. B. beim Pflügen, bei dem das Arbeitsgerät in immer gleichbleibender Höhe über dem Boden geführt wird, erforderlich.

Der erste Hydraulikzylinder und der zweite Hydraulikzylinder bilden vorzugsweise eine ineinander geschachtelte Baueinheit, bei der die beiden Hydraulikzylinder funktionsmäßig hintereinander angeordnet sind und die Federeinrichtung zwischen den beiden Hydraulikzylindern angreift. Als Federeinrichtung eignen sich insbesondere eine Luftkissenfederung oder eine Schraubenfederanordnung.

Gemäß einer weiteren bevorzugten Ausgestaltung der Erfindung sind der Fahrzeugoberbau und der Achskörper durch wenigstens zwei im wesentlichen parallel verlaufende, in etwa gleich lange Schwingen miteinander verbunden. Die Schwingen sind gelenkig am Fahrzeugoberbau einerseits und am Achskörper andererseits im Sinne eines Schwingungsparallelogramms befestigt und lassen lediglich eine im wesentlichen translatorische Relativbewegung zwischen Fahrzeugoberbau und Achskörper zu.

Durch diese Ausgestaltung der Aufhängung ergibt sich eine Schwingungsfederung der Lenkachsen, bei der sich der Achskörper nicht infolge einer Einfederung verdreht, sondern nur translatorisch in bezug auf den Fahrzeugoberbau bewegt wird. Dies wirkt sich insbesondere bei einer Lenkachse mit horizontal liegendem Pendellager günstig aus, da die horizontale Lage des Pendelbolzens bei unterschiedlicher Durchfederung unverändert bleibt. Aus diesem Grund bleiben die Lenkungsdaten, wie Spreizung, Nachlaufwinkel und Radsturz, bei unterschiedlicher Durchfederung unverändert erhalten.

Beim Einfedern tritt eine Verschiebung zwischen Achskörper und Fahrzeugaufbau nicht nur in vertikaler Richtung, sondern gewöhnlich auch mit geringer horizontaler Komponente auf. Um eine durch die Federung ausgelöste, bezüglich des Fahrzeuges seitliche Relativverschiebung zu vermeiden, sind die Schwingen gemäß Patentanspruch 7 im wesentlichen in Fahrzeuglängsrichtung ausgerichtet, so daß die horizontale Komponente in Fahrtrichtung weist, wobei keine nachteiligen Folgen zu erwarten sind.

Vorteilhaft für die Kraftaufnahme ist eine symmetrische Anordnung, bei der beidseits eines im mittleren Bereich des Achskörpers angeordneten Pendellagers je ein aus Schwingen aufgebautes Schwingungsparallelogramm am Pendellager befestigt ist.

Dabei sind, ausgehend vom Pendellager, die beiden Schwingungsparallelogramme im unbelasteten Zustand vorzugsweise leicht nach oben ausgerichtet und laufen zur Fahrzeugvorderseite, wo sie am Fahrzeugoberbau befestigt sind, leicht auseinander. Die Ausrichtung leicht nach oben ermöglicht es, daß auch bei einer Durchfederung infolge der Aufnahme einer Zusatzlast die Schwingen im wesentlichen horizontal ausgerichtet bleiben und daß bei Federschwingungen die Relativbewegungen in Fahrzeuglängsrichtung gering bleiben.

Die Befestigungspunkte der beiden Schwingungsparallelogramme am Fahrzeugoberbau liegen bei der vorgeschlagenen Ausbildung relativ weit auseinander, so daß sich eine günstige Kraftaufnahme und damit kleinbauende Konstruktion ergibt.

Weitere vorteilhafte Ausgestaltungen und Weiterbildungen der Erfindung gehen aus den Unteransprüchen hervor.

Anhand der Zeichnung, die ein Ausführungsbeispiel der Erfindung zeigt, sollen die Erfindung sowie weitere Vorteile und vorteilhafte Weiterbildungen und Ausgestaltungen der Erfindung näher beschrieben und erläutert werden.

Es zeigt:
- Fig. 1: die schematische Vorderansicht eines Ackerschleppers mit erfindungsgemäßer Lenkachsenaufhängung,
- Fig. 2: die Seitenansicht des vorderen Bereiches eines Akkerschleppers mit angetriebener Lenkachse und erfindungsgemäßer Lenkachsenaufhängung,
- Fig. 3: die perspektivische Darstellung einer erfindungsgemäßen Lenkachsenaufhängung,
- Fig. 4: den Querschnitt einer erfindungsgemäßen Lenkachsenaufhängung in Fahrzeuglängsrichtung längs der Linie IV - IV in Fig. 1 und
- Fig. 5: den Querschnitt durch einen Doppelhydraulikzylinder mit Hydraulikkreis.

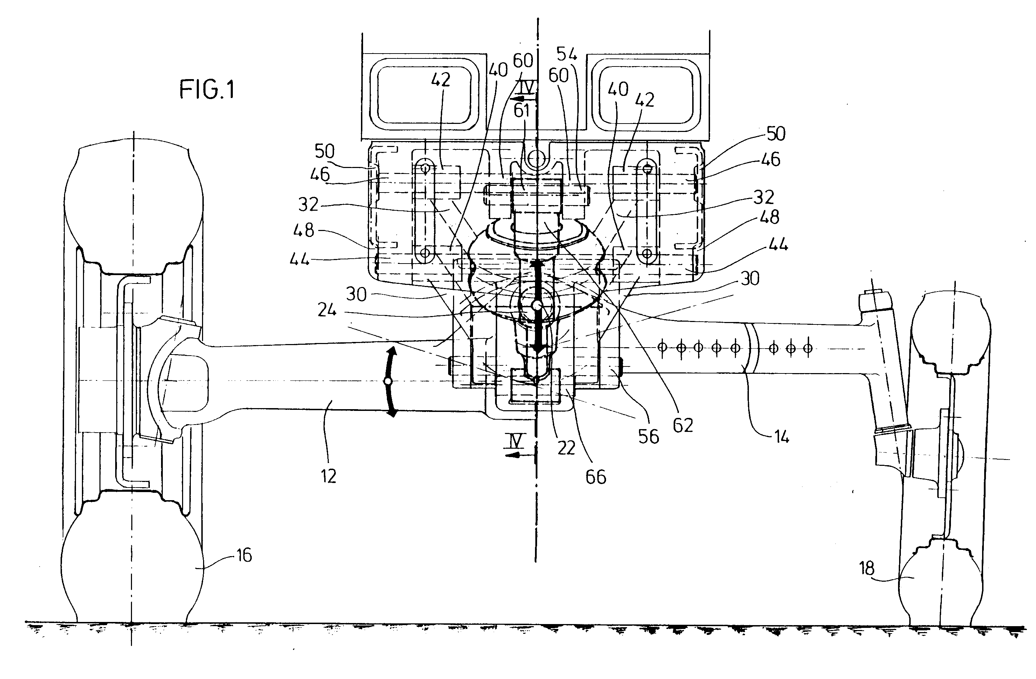

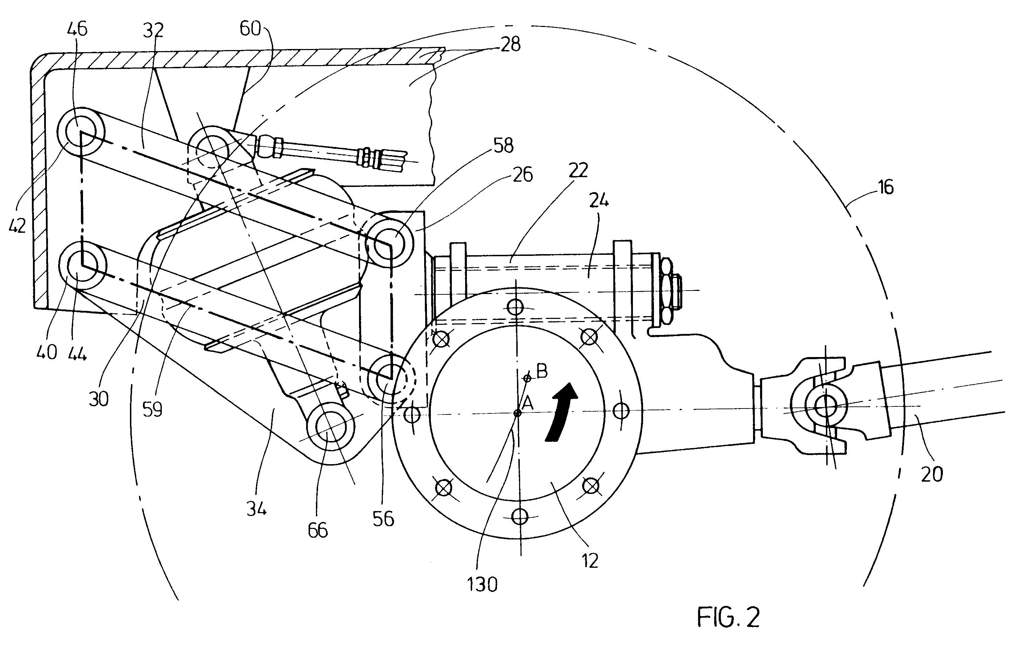

In Fig. 1 sind beidseits der Längsachse eines Ackerschleppers unterschiedliche lenkbare Vorderachsen 12, 14 dargestellt, an deren Enden die Vorderräder 16, 18 des Schleppers angeordnet sind. Die linke Seite der Fig. 1 zeigt eine über eine Gelenkwelle 20 (Fig. 2) antreibbare Vorderachse 12, und die rechte Seite der Fig. 1 zeigt eine nicht angetriebene Standardachse 14. Derartige Achsen 12, 14 sind hinlänglich bekannt und werden hier nicht näher beschrieben. Die erfindungsgemäße Aufhängung kann auf jede der beiden Achsen 12, 14 angewendet werden, so daß im folgenden nur noch generell von der Vorderachse 12, 14 oder dem Achskörper die Rede sein wird.

Der Achskörper 12 trägt eine Pendellagerung 22, die einen in Fahrzeuglängsrichtung weisenden Pendelbolzen 24 aufnimmt, um den der Achskörper 12 verschwenkbar ist. Die Pendelbolzenachse ist horizontal ausgerichtet und liegt ungefähr in der Mitte des Achskörpers 12. Der Pendelbolzen 24 trägt an seinem vorderen Ende eine Aufnahme 26.

Oberhalb des Achskörpers 12 ist in Fig. 2 ein Teil des zum Fahrzeugoberbau 28 gehörenden Achsträgers oder Fahrzeugrahmens dargestellt. Der Fahrzeugoberbau 28 und die Aufnahme 26 sind durch vier Schwingen 30, 32 gelenkig miteinander verbunden, wobei beidseits zur Fahrzeuglängsachse und symmetrisch zu dieser je zwei im wesentlichen parallel zueinander verlaufende, übereinander liegende Schwingen 30, 32 angeordnet sind.

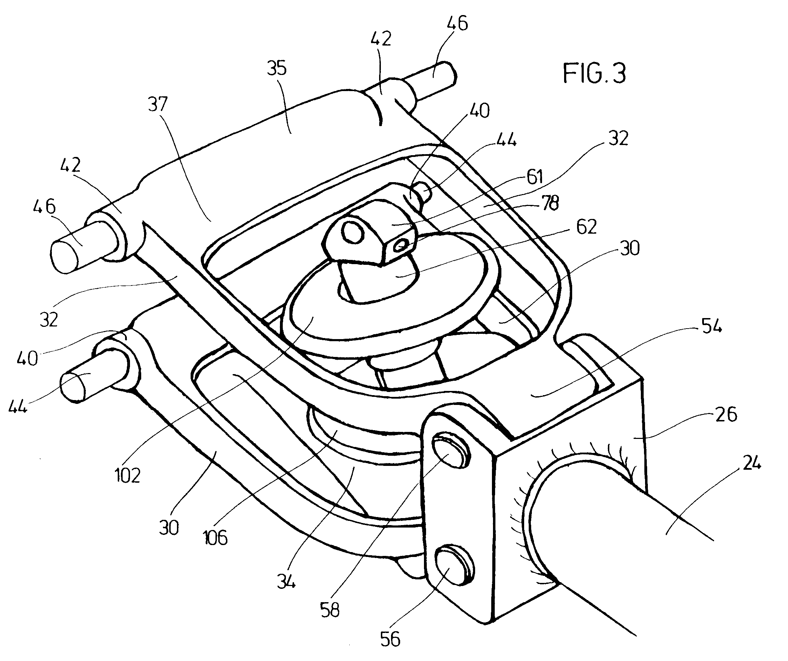

Wie aus Fig. 3 ersichtlich, sind die beiden unteren Schwingen 30 Bestandteile eines topfförmigen Bauteils 34, welches in Seitenansicht (Fig. 2) im wesentlichen die Form eines Dreiecks hat. Die beiden unteren Schwingen 30 bilden die beiden seitlichen nach oben gerichteten Ränder des topfförmigen Bauteils 34. Durch die topfförmige Ausbildung ergibt sich eine sehr steife Konstruktion, die in der Lage ist, die hohen Zug-, Druck- und Biegekräfte aufzunehmen. Das Bauteil 34 läßt sich durch Tiefziehen aus Stahlblech herstellen.

Auch die beiden oberen Schwingen 32 sind Teil eines zusammenhängenden Bauteiles 35 und sind im vorderen Bereich durch ein nach oben gewölbtes Haubenteil 37 miteinander verbunden. Das die oberen Schwingen 32 enthaltende Bauteil 35 ist ebenfalls in sich biegesteif ausgebildet.

In ihren sich nach vorne erstreckenden Bereichen tragen die Bauteile 34 und 35 hülsenförmige Lagerungen 40, 42, die horizontal verlaufende und sich quer zur Fahrzeuglängsachse erstreckende Durchgangsbohrungen enthalten, durch die jeweils ein Bolzen 44, 46 gesteckt ist. Die beidseits des jeweiligen Bauteiles 34, 35 aus den Lagerungen 40, 42 herausragenden Enden der Bolzen 44, 46 sind in am Fahrzeugoberbau befestigten Halteblöcken 48, 50 (Fig. 1) gelagert. Die Schwingen 30, 32 lassen sich um die Achslinien der Bolzen 44, 46 in vertikaler Richtung verschwenken.

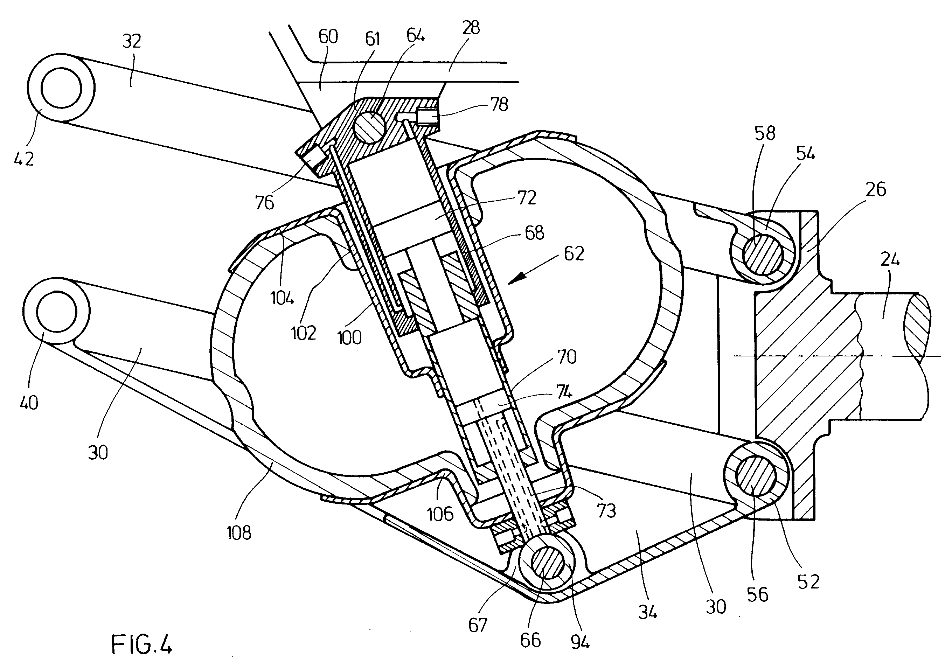

Auch die nach hinten weisenden Bereiche der Bauteile 34, 35 tragen Lagerungen 52, 54 mit horizontal ausgerichteten, quer zur Fahrzeuglängsachse liegenden Bohrungen (Fig. 4). In ähnlicher Weise wie bei den vorderen Lagerungen 40, 42 sind auch durch die hinteren Bohrungen Bolzen 56, 58 gesteckt, die durch Bohrungen in der Aufnahme 26 verlaufen, so daß die hinteren Enden der Schwingen 30, 32 in vertikaler Richtung verschwenkbar an der Aufnahme 26 befestigt sind.

Wie aus Fig. 3 hervorgeht, liegen die hinteren Lagerstellen jeder Lagerung 52, 54 enger zusammen als die vorderen Lagerstellen der Lagerungen 40, 42. Die Aufspreizung nach vorn gewährleistet eine günstige Kraftaufnahme von dem Fahrzeugoberbau 28 aus und damit eine relativ kleinbauende Konstruktion.

Die jeweils auf einer Seite übereinander angeordneten Schwingen 30, 32 bilden im wesentlichen ein Schwingungsparallelogramm, dessen nach vorn weisende Schenkel unter einem schwachen Winkel nach oben gerichtet sind. Das Schwingungsparallelogramm ist in Fig. 2 durch eine strichpunktierte Linie 59 hervorgehoben.

Zwischen den beidseits der Pendelachse angeordneten Schwingungsparallelogrammen ist im oberen Bereich am Fahrzeugoberbau 28 eine gabelförmige Halterung 60 (Fig. 1) befestigt, die in ihrer Mitte das obere Ende 61 einer Hydraulikzylinderbaueinheit 62 aufnimmt, wobei letztere um einen sich quer zur Fahrzeuglängsachse erstreckenden, horizontal ausgerichteten Bolzen 64 schwenkbar in der Halterung 60 gelagert ist (Fig. 4). Das untere Ende der Hydraulikzylinderbaueinheit 62 ist über einen weiteren, quer zur Fahrzeuglängsachse ausgerichteten horizontal verlaufenden Bolzen 66 in einer Halterung 67 schwenkbar gelagert. Die Halterung 67 ist innerhalb des topfförmigen Bauteils 34 in dessen tiefstgelegenen Bereich angeformt (Fig. 4).

Da die Hydraulikzylinderbaueinheit und mit ihr die Federeinrichtung mit ihrem unteren Ende im mittleren Bereich der unteren Schwingen 30 zwischen deren Befestigungspunkten an dem Fahrzeugoberbau 28 und der Aufnahme 26 angreift, hat die Federeinrichtung kürzere Federwege aufzunehmen als bei einem Angriff unmittelbar an der Aufnahme 26. Hierdurch ist es möglich, mit kleineren Bauteilen eine kompakte und platzsparende Baueinheit zu realisieren.

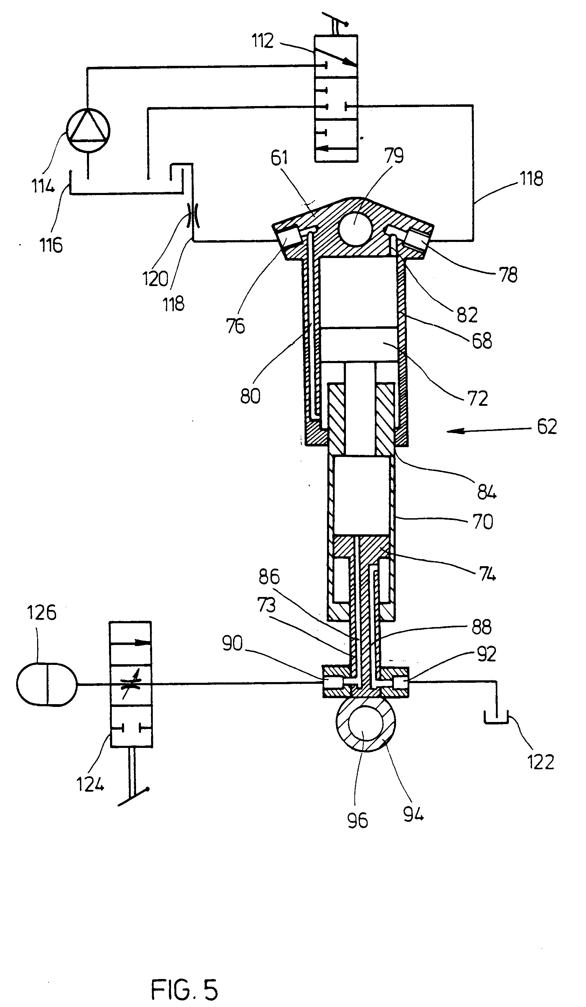

Die Hydraulikzylinderbaueinheit 62 wird anhand der Figuren 4 und 5 näher beschrieben. Sie besteht im wesentlichen aus zwei ineinander geschachtelten Zylindergehäusen 68, 70, in denen Kolben 72, 74 hydraulisch verschiebbar geführt sind. Das obere Zylindergehäuse 68 enthält zwei Hydraulikanschlüsse 76, 78, die über im Gehäusemantel verlaufende Kanäle 80, 82 mit jeweils einer der beidseits des oberen Kolbens 72 ausgebildeten Zylinderkammern verbunden sind. Zwischen den Hydraulikanschlüssen 76, 78 befindet sich im oberen Ende 61 des oberen Zylindergehäuses 68 eine Bohrung 79, die den Bolzen 64 aufnimmt, um die schwenkbare Verbindung mit der Halterung 60 herzustellen.

Der obere Kolben 72 ist mit dem unteren Zylindergehäuse 70 fest verbunden. Das untere Zylindergehäuse 70 ist dichtend und axial verschiebbar durch eine Öffnung 84 in der unteren Stirnfläche des oberen Zylindergehäuses 68 aus diesem herausgeführt. Das untere Zylindergehäuse 70 nimmt einen unteren Kolben 74 auf, in dessen Schaft 73 Kanäle 86, 88 verlaufen, die die beiden Zylinderkammern des unteren Zylindergehäuses 70 mit Hydraulikanschlüssen 90, 92 verbinden. Der Schaft 73 des unteren Kolbens 74 ist aus dem unteren Zylindergehäuse 70 dichtend und axial verschiebbar herausgeführt. An seinem nach außen weisenden Ende trägt der Schaft 73 ein Kopfteil 94 mit einer Bohrung 96, durch die der Bolzen 66 gesteckt ist, um die schwenkbare Verbindung mit der im Bauteil 34 befestigten Halterung 67 herzustellen.

Wie aus Fig. 4 hervorgeht, ist an der äußeren Mantelfläche des unteren Zylindergehäuses 70 das zylindrische Schaftteil 100 eines ersten Federtellers 102 dichtend befestigt. Das Schaftteil 100 erstreckt sich bis zu einer Tellerfläche 104 des ersten Federtellers 102, welche sich quer zu der Zylinderachse erstreckt und sich in der Nähe des oberen Endes 61 der Hydraulikzylinderbaueinheit 62 befindet. Im Bereich des unteren Endes der Hydraulikzylinderbaueinheit 62 ist an dem Schaft 73 des unteren Kolbens 74 ein zweiter Federteller 106 dichtend befestigt. Zwischen dem ersten und dem zweiten Federteller 102, 106 ist ein ballonförmiges Luftkissen 108 dichtend eingespannt. Die aus Federtellern 102, 106 und Luftkissen 108 gebildete Federeinrichtung ist so ausgelegt, daß sie in der Lage ist, das Vorderachsgewicht des Ackerschleppers federnd zu tragen. In Fig. 3 wurden der besseren Übersichtlichkeit halber nur die beiden Federteller 102, 106, nicht aber das Luftkissen 108 eingezeichnet.

Gemäß Fig. 5 ist zur Steuerung des oberen Hydraulikkolbens 72 ein handbetätigbares 3/3-Hydraulikventil 112 vorgesehen. Ein erster Anschluß des Hydraulikventils 112 ist mit einer Hydraulikpumpe 114, ein zweiter Anschluß ist mit einem Sammelbehälter 116, und ein dritter Anschluß ist über den Hydraulikanschluß 78 und den Kanal 82 mit der oberen Zylinderkammer des oberen Zylindergehäuses 68 verbunden. Ferner steht die untere Zylinderkammer über den Kanal 80, den Hydraulikanschluß 76 und eine Leitung 118 mit dem Sammelbehälter 116 in Verbindung.

Durch Umsteuerung des Hydraulikventils 112 läßt sich die obere Zylinderkammer in einer ersten Ventilstellung mit dem Druck der Hydraulikpumpe 114 beaufschlagen, der ausreicht, um den oberen Kolben 72 im Zylindergehäuse 68 zu verschieben und den vorderen Fahrzeugteil anzuheben. In einer mittleren Stellung bestehen keine Verbindungen zwischen den Anschlüssen des Hydraulikventils 112, so daß der obere Kolben 72 im Zylindergehäuse 68 starrgesetzt ist. In einer dritten Stellung ist die obere Zylinderkammer mit dem drucklosen Vorratsbehälter 116 verbunden und wird druckentlastet, so daß sich der vordere Fahrzeugteil absenkt. Um ein zu rasches Absenken zu vermeiden, ist in der Leitung 118 eine Drosselstelle 120 vorgesehen.

Der obere Hydraulikzylinder 68 dient dem Höhenausgleich bei unterschiedlichen Achslasten und bei einer von der Schlepper-Grundausrüstung abweichenden Bereifungskombination. Bei einer Belastung durch ein Anbaugerät kann das vordere Fahrzeugteil durchfedern. Um das Fahrzeug wieder horizontal auszurichten, kann die obere Kammer des oberen Zyindergehäuses 68 mit Druck beaufschlagt werden, so daß der Kolben 72 verschoben wird und der Achskörper 12 relativ zum Fahrzeugrumpf wieder in die ursprüngliche Ruhelage zurückkehrt. Ebenso kann eine Schrägstellung des Fahrzeuges infolge unterschiedlicher Bereifungskombinationen durch Druckbeaufschlagung des oberen Hydraulikkolbens 72 ausgeglichen werden.

Die untere Zylinderkammer des unteren Zylindergehäuses 70 ist über den Kanal 88 und den Hydraulikanschluß 92 mit einem Sammelbehälter 122 verbunden. Die obere Zylinderkammer steht hingegen über den Kanal 86, den Hydraulikanschluß 90 und ein handbetätigbares hydraulisches Steuerventil 124 mit einem hydro-pneumatischen Druckspeicher 126 in Verbindung.

Derartige Speicher sind allgemein bekannt. Sie bestehen im wesentlichen aus einem hermetisch abgeschlossenen, druckfesten Gehäuse, dessen Innenraum durch eine elastische Wand in zwei Teile geteilt ist. Während ein Teil mit einer Druckflüssigkeit gefüllt ist und mit der als Druckraum wirkenden oberen Zylinderkammer in Verbindung steht, enthält der andere Teil ein unter hohem Druck stehendes Gas. Der Druck im Druckspeicher 126 hält den unteren Kolben 74 in einer mittleren Stellung innerhalb des unteren Zylindergehäuses 70.

Durch das Steuerventil 124 läßt sich die Verbindung zwischen dem Druckspeicher 126 und der oberen Zylinderkammer des unteren Zylindergehäuses 70 stufenlos von geöffnet über gedrosselt bis geschlossen einstellen. Ist das Steuerventil 124 geöffnet, so kann eine Druckänderung im unteren Zylindergehäuse 70, die infolge einer Laständerung auftritt, vom Druckspeicher 126 aufgenommen werden, wodurch eine Verschiebung des Kolbens 74 im unteren Zylindergehäuse 70 eintritt. Durch Drosselung des Steuerventils 124 wird der Druckausgleich gedämft und bei geschlossenem Steuerventil 124 ganz unterbunden. Hierdurch läßt sich für die zum unteren Zylindergehäuse 70 parallel wirkende, aus Federtellern 102, 106 und Luftkissen 108 gebildete Federeinrichtung eine Dämpfung einstellen, so daß sich ein Stoßdämpfereffekt ergibt. Durch Schließen des Steuerventils 124 wird die Federeinrichtung starr gesetzt, was für schwere Arbeiten mit Anbaugeräten und dergleichen zweckmäßig ist.

Soll die Vorderachsfederung wirksam sein, so wird das Steuerventil 124 wenigstens teilweise geöffnet, so daß die Federeinrichtung aus Tellerfedern 102, 106 und Luftkissen 108 die Last des vorderen Fahrzeugteiles aufnehmen kann. Bei Einfederung verschwenken sich die Schwingungsparallelogramme um die Bolzen 56 und 58 in vertikaler Richtung, wobei die Schwingen 30, 32 zueinander parallel ausgerichtet bleiben.

Bei Federungen bewegt sich die Mittellinie des Achskörpers 12 relativ zum Fahrzeugoberbau 28 längs einer bogenförmigen Linie 130. Für ein nicht belastetes Fahrzeug wird gemäß Fig. 2 die Ruhelage A eingenommen. Wie aus dem Verlauf der Linie 130 hervorgeht, führen vertikale Federbewegungen dazu, daß sich die Lage des Achskörpers 12 relativ zum Fahrzeugoberbau 28 auch in Fahrzeuglängsrichtung etwas verschiebt. Bei Belastung nimmt die Mittellinie des Achskörpers 12 beispielsweise die Lage B ein. Hierbei ist der Achskörper 12 leicht nach hinten verschoben. Bei Entlastung tritt eine leichte Verschiebung nach vorn auf. Eine Verdrehung des Achskörpers 12 tritt hierbei jedoch nicht auf.

## Patentansprüche

1. Aufhängung der Lenkachse eines Fahrzeuges, insbesondere eines landwirtschaftlichen oder industriellen Fahrzeuges, mit einer zwischen Fahrzeugoberbau (28) und Achskörper (12, 14) angeordneten Federeinrichtung, wobei zwischen Fahrzeugoberbau (28) und Achskörper (12, 14) wenigstens eine gelenkig befestigte Hydraulikzylinderbaueinheit (62) angeordnet ist, dadurch gekennzeichnet, daß ein Hydraulikzylinder (68) der Hydraulikzylinderbaueinheit (62) funktionsmäßig mit der Federeinrichtung zwischen dem Fahrzeugoberbau (28) und dem Achskörper (12, 14) in Reihe angeordnet ist und über ein Hydraulikventil (112) an eine Druckquelle (114) anschließbar ist.

2. Aufhängung nach Anspruch 1, dadurch gekennzeichnet, daß ein weiterer Hydraulikzylinder (70) funktionsmäßig parallel zu der Federeinrichtung angeordnet ist und daß eine Kolbenbewegung im Hydraulikzylinder (70) durch ein Steuerventil (124) blockierbar ist.

3. Aufhängung nach Anspruch 2, dadurch gekennzeichnet, daß der Hydraulikzylinder (68) und der weitere Hydraulikzylinder (70) eine ineinander geschachtelte Baueinheit (62) bilden, bei der die beiden Hydraulikzylinder (68, 70) funktionsmäßig hintereinander angeordnet sind und die Federeinrichtung zwischen den beiden Hydraulikzylindern (68, 70) angreift.

4. Aufhängung nach einem der Ansprüche 1 bis 3, dadurch gekennzeichnet, daß die Federeinrichtung konzentrisch zum Hydraulikzylinder bzw. zur Hydraulikzylinderbaueinheit (62) angeordnet ist.

5. Aufhängung nach einem der Ansprüche 1 bis 4, dadurch gekennzeichnet, daß die Federeinrichtung wenigstens eine Luftkissenfederung (108) oder wenigstens eine Schraubenfederanordnung enthält.

6. Aufhängung nach einem der Ansprüche 1 bis 5, dadurch gekennzeichnet, daß der Fahrzeugoberbau (28) und der Achskörper (12, 14) durch wenigstens zwei im wesentlichen parallel verlaufende, in etwa gleich lange Schwingen (30, 32) miteinander verbunden sind, die gelenkig am Fahrzeugoberbau (28) einerseits und am Achskörper (12, 14) andererseits im Sinne eines Schwingungsparallelogramms befestigt sind und lediglich eine im wesentlichen translatorische Relativbewegung zwischen Fahrzeugoberbau (28) und Achskörper (12, 14) zulassen.

7. Aufhängung nach Anspruch 6, dadurch gekennzeichnet, daß die wenigstens zwei Schwingen (30, 32) im wesentlichen übereinander liegen und in Fahrzeuglängsrichtung ausgerichtet sind und daß die Schwingen (30, 32) sich gegenüber dem Fahrzeugoberbau (28) bzw. dem Achskörper (12, 14) um im wesentlichen horizontal und quer zur Fahrzeuglängsachse ausgerichtete Achsen (44, 46, 56, 58) verschwenken lassen.

8. Aufhängung nach Anspruch 6 oder 7, dadurch gekennzeichnet, daß der Achskörper (12, 14) die lenkbaren Fahrzeugräder (16, 18) und ein mittleres Pendellager (22) trägt und daß beidseits der Pendelachse (24) und in etwa symmetrisch zu dieser je ein Schwingungsparallelogramm am Pendellager (22) befestigt ist.

9. Aufhängung nach Anspruch 8, dadurch gekennzeichnet, daß die beiden Schwingungsparallelogramme ausgehend vom Pendellager (22) im unbelasteten Zustand leicht nach oben ausgerichtet sind und sich im wesentlichen leicht auseinander laufend zur Fahrzeugvorderseite erstrecken, wo sie am Fahrzeugoberbau (28) befestigt sind.

10. Aufhängung nach Anspruch 8 oder 9, dadurch gekennzeichnet, daß der Hydraulikzylinder bzw. die Hydraulikzylinderbaueinheit (62) und/oder die Federeinrichtung in etwa symmetrisch zwischen den beiden Schwingungsparallelogrammen angeordnet sind.

## Claims

1. Suspension of the steering axle of a vehicle, in particular an agricultural or industrial vehicle, with a spring device arranged between vehicle body (28) and axle body (12, 14), wherein between vehicle body (28) and axle body (12, 14) is arranged at least one articulated hydraulic cylinder unit (62), characterised in that a hydraulic cylinder (68) of the hydraulic cylinder unit (62) is arranged functionally in series with the spring device between the vehicle body (28) and the axle body (12, 14) and can be connected by a hydraulic valve (112) to a pressure source (114).

2. Suspension according to claim 1, characterised in that an additional hydraulic cylinder (70) is arranged functionally parallel to the spring device and in that a piston movement in the hydraulic cylinder (70) can be locked by a control valve (124).

3. Suspension according to claim 2, characterised in that the hydraulic cylinder (68) and the additional hydraulic cylinder (70) form a unit (62) nested one inside the other, in which the two hydraulic cylinders (68, 70) are arranged functionally one behind the other and the spring device engages between the two hydraulic cylinders (68, 70).

4. Suspension according to any of claims 1 to 3, characterised in that the spring device is arranged concentrically with the hydraulic cylinder or with the hydraulic cylinder unit ((62).

5. Suspension according to any of claims 1 to 4, characterised in that the spring device contains at least one air cushion spring unit (108) or at least one helical spring assembly.

6. Suspension according to any of claims 1 to 5, characterised in that the vehicle body (28) and the axle body (12, 14) are connected to each other by at least two essentially parallel swinging arms (30, 32) of more or less equal length which are articulated to the vehicle body (28) on the one hand and to the axle body (12, 14) on the other hand in the sense of a swinging parallelogram and allow only an essentially translational relative movement between vehicle body (28) and axle body (12, 14).

7. Suspension according to claim 6, characterised in that the at least two swinging arms (30, 32) are located essentially one above the other and oriented in the longitudinal direction of the vehicle and in that the swinging arms (30, 32) can be pivoted relative to the vehicle body (28) or axle body (12, 14) about shafts (44, 46, 56, 58) oriented essentially horizontally and transversely to the longitudinal axis of the vehicle.

8. Suspension according to claim 6 or 7, characterised in that the axle body (12, 14) carries the steerable vehicle wheels (16, 18) and a central self-aligning bearing (22) and in that on either side of the swing axle (24) and more or less symmetrically thereto a swinging parallelogram is attached to the self-aligning bearing (22).

9. Suspension according to claim 8, characterised in that the two swinging parallelograms starting from the self-aligning bearing (22) in the unloaded state are oriented slightly upwardly and extend essentially in slightly diverging relationship to the front of the vehicle, where they are attached to the vehicle body (28).

10. Suspension according to claim 8 or 9, characterised in that the hydraulic cylinder or the hydraulic cylinder unit (62) and/or the spring device are arranged more or less symmetrically between the two swinging parallelograms.

## Revendications

1. Suspension de l'essieu orientable d'un véhicule, notamment d'un véhicule agricole ou industriel, comportant un dispositif à ressort disposé entre la partie supérieure (28) du véhicule et le corps d'essieu (12,14), et dans laquelle au moins une unité de construction à vérin hydraulique (62) fixée de façon articulée est disposée entre la partie supérieure (28) du véhicule et le corps d'essieu (12,14), caractérisée en ce qu'un vérin hydraulique (68) de l'unité de construction à vérin hydraulique (62) est monté, du point de vue fonctionnel, en série avec un dispositif à ressort entre la partie supérieure (28) du véhicule et le corps d'essieu (12,14) et peut être raccordé à une source de pression (114) par l'intermédiaire d'une soupape hydraulique (112).

2. Suspension suivant la revendication 1, caractérisée par le fait qu'un autre vérin hydraulique (70) est disposé, du point de vue fonctionnel, en parallèle avec le dispositif à ressort, et qu'un déplacement du piston dans le vérin hydraulique (70) peut être bloqué au moyen d'une soupape de commande (124).

3. Suspension suivant la revendication 2, caractérisée en ce que le vérin hydraulique (68) et l'autre vérin hydraulique (70) forment une unité de construction (62), dans laquelle les deux vérins hydrauliques (68,70) sont imbriqués l'un dans l'autre et sont disposés, du point de vue fonctionnel, en série, et que le dispositif à ressort est accroché entre les deux vérins hydrauliques (68,70).

4. Suspension suivant l'une des revendications 1 à 3, caractérisé en ce que le dispositif à ressort est disposé concentriquement par rapport au vérin hydraulique ou à l'unité de construction à vérins hydrauliques (62).

5. Suspension suivant l'une des revendications 1 à 4, caractérisée en ce que le dispositif à ressort contient au moins une suspension à coussin pneumatique (108) ou au moins un dispositif à ressort hélicoïdal.

6. Suspension suivant l'une des revendications 1 à 5, caractérisée en ce que la partie supérieure (28) du véhicule et le corps d'essieu (12,14) sont reliés entre eux par au moins deux leviers oscillants (30,32) de même longueur, essentiellement en parallèle, qui sont fixés d'une manière articulée d'une part à la partie supérieure (28) du véhicule et d'autre part au corps d'essieu (12,14) dans le sens d'un parallélogramme oscillant et permettent uniquement un déplacement relatif essentiellement de translation entre la partie supérieure (28) du véhicule et le corps d'essieu (12,14).

7. Suspension selon la revendication 6, caractérisée en ce que les au moins deux leviers oscillants (30,32) sont essentiellement superposés et sont orientés dans la direction longitudinale du véhicule et que les leviers oscillants (30,32) peuvent basculer par rapport à la partie supérieure (28) du véhicule ou au corps d'essieu (12,14) autour d'axes (44,46,56,58) qui sont orientés essentiellement horizontalement et transversalement par rapport à l'axe longitudinal du véhicule.

8. Suspension suivant la revendication 6 ou 7, caractérisée en ce que le corps d'essieu (12,14) porte les roues orientables (16,18) du véhicule et un palier pendulaire médian (22), et que respectivement un parallélogramme oscillant est fixé au levier pendulaire (22) des deux côtés de l'axe d'oscillation pendulaire (24) et d'une manière approximativement symétrique par rapport à cet axe.

9. Suspension selon la revendication 8, caractérisée en ce que les deux parallélogrammes oscillants sont orientés légèrement vers le haut, à partir du palier pendulaire (22), à l'état non chargé et s'étendent en s'écartant essentiellement faiblement en direction du côté avant du véhicule, où ils sont fixés à la partie supérieure (28) de ce dernier.

10. Suspension selon la revendication 8 ou 9, caractérisée en ce que le vérin hydraulique ou l'unité de construction à vérins hydrauliques (62) et/ou le dispositif à ressort sont disposés d'une manière approximativement symétrique entre les deux parallélogrammes oscillants.
